# EUROPÄISCHE PATENTSCHRIFT

(11) **EP 4 303 466 B1**
(45) Veröffentlichungstag und Bekanntmachung des Hinweises auf die Patenterteilung: **15.10.2025**
(21) Anmeldenummer: 23180619.1
(22) Anmeldetag: 21.06.2023
(51) Int. Cl.: F16H 25/20, F16H 25/22

(54) **ELEKTROMECHANISCHER LINEARAKTUATOR MIT HOHLWELLENMOTOR**
ELECTROMECHANICAL LINEAR ACTUATOR WITH A HOLLOW SHAFT MOTOR
ACTIONNEUR LINÉAIRE ÉLECTROMÉCANIQUE DOTÉ D'UN MOTEUR À ARBRE CREUX

(30) Priorität: 06.07.2022 DE 102022206871
(43) Veröffentlichungstag der Anmeldung: 10.01.2024
(73) Patentinhaber: Robert Bosch GmbH, 70442 Stuttgart (DE)
(72) Erfinder: Goldbach, Michael, 97816 Lohr A. Main (DE); Knoell, Marco, 97775 Burgsinn (DE); Knoell, Reiner, 97775 Burgsinn (DE)

(56) Entgegenhaltungen:
- US-A1- 2006 266 146
- US-A1- 2009 260 464
- US-A1- 2014 300 228
- US-A1- 2021 364 070

## Beschreibung

### Technisches Gebiet

Die vorliegende Offenbarung betrifft einen elektromechanischen Linearaktuator, der auch als Elektrozylinder bezeichnet werden kann, und bei dem eine rotatorische Antriebsbewegung eines Elektromotors mittels eines Gewindetriebs in eine translatorische bzw. lineare Abtriebsbewegung umgewandelt wird.

Die Druckschrift DE 199 48 265 C2 zeigt einen derartigen elektromechanischen Linearaktuator, dessen Elektromotor als Hohlwellenmotor ausgestaltet ist. In Axialrichtung betrachtet neben dem Elektromotor ist an dessen Hohlwelle die Gewindemutter befestigt. Damit rotiert die Gewindemutter zusammen mit der Hohlwelle, während die Gewindespindel nur linear bewegt wird und nicht rotiert. Nachteilig an derartigen elektromechanischen Linearaktuatoren ist, dass durch die - in Axialrichtung betrachtet - benachbarte Anordnung von Elektromotor und Gewindemutter der axiale Bauraumbedarf des ruhenden Gehäuses des Linearaktuators groß ist.

Die Druckschrift DE 43 00 512 B4 zeigt zwei Ausführungsbeispiele eines elektromechanischen Linearaktuators, der als Kraftstoffpumpe eingesetzt wird. In beiden Ausführungsbeispielen ist jeweils ein Kugelgewindetrieb eingesetzt. Beim zweiten Ausführungsbeispiel ist die aus Vollmaterial gefertigte Motorwelle des Elektromotors einstückig mit der Gewindespindel gebildet, die mit einer ruhenden als Gewindemutter dienenden Hülse den Kugelgewindetrieb bildet. Damit rotiert die Gewindespindel und wird linear bewegt. Bei dem ersten Ausführungsbeispiel der DE 43 00 512 B4 ist abweichend ein Elektromotor mit Hohlwelle vorgesehen, die gleichzeitig die rotierende Gewindemutter des Spindeltriebs bildet. Damit wird die Gewindespindel nur linear bewegt und rotiert nicht. Da der Elektromotor am Außenumfang der Gewindemutter angeordnet ist, ist das Verhältnis zwischen eingefahrenem Zustand und ausgefahrenem Zustand des Linearaktuators gegenüber dem des zweiten Ausführungsbeispiels und gegenüber dem der DE 199 48 265 C2 grundsätzlich maximiert.

Die Patentschrift EP 2 584 222 B1 zeigt den Teil eines Elektrozylinders, der für die Kopplung an einen gesonderten nicht integrierten Elektromotor ausgelegt ist. Die Gewindespindel rotiert, wird aber nicht linear bewegt. Stattdessen wird ein Auslegerrohr linear bewegt. Der Linearaktuator mit Auslegerrohr hat gegenüber den zuvor genannten Linearaktuatoren den Vorteil, dass die mechanisch und fertigungstechnisch aufwändige Gewindespindel innerhalb des Auslegerrohres aufgenommen ist und somit vor Schmutz und mechanischen Beschädigungen geschützt ist. Dokument US2021/364070 A1 offenbart einen elektromechanischen Linearaktuator mit einer Motorbaugruppe, die in Form einer Hohlwelle oder eines Hohlrotors vorgesehen ist. Der Rotor kann allgemein zylindrische Außen- und Innenflächen haben, wobei die Statorwicklungen und der Rotor einen zentral angeordneten linearen Schubmechanismus umgeben, der eine Gewindespindel oder Gewindewelle mit Mutter (oder Mutteranordnung) umfasst, die direkt mit dem Schubrohr, der Abtriebsstange oder einer anderen Lastübertragungsstruktur verbunden ist. Der Linearaktuator ist so konfiguriert, dass er die Rotationsbewegung des Rotors in eine lineare Bewegung des Schubrohrs umwandelt.

Aufgabe der vorliegenden Erfindung ist es, einen elektromechanischen Linearaktuator mit geringeren Gewicht sowie mit optimierten radialen Dimensionen zu schaffen, bei dem die durch das Auslegerrohr geschützte Gewindespindel nach dem Prinzip der EP 2 584 222 B1 mit dem maximierten Längenverhältnis zwischen dem ausgefahrenen Zustand und dem eingefahrenen Zustand des ersten Ausführungsbeispiels der DE 43 00 512 B4 kombiniert sind.

Diese Aufgabe wird gelöst durch einen elektromechanischen Linearaktuator mit den Merkmalen des Patenanspruchs 1.

Vorteilhafte Ausgestaltungen sind Gegenstand der Unteransprüche.

Der beanspruchte elektromechanische Linearaktuator hat einen Gewindetrieb, der eine Gewindespindel und eine Gewindemutter aufweist. Die Gewindespindel ist über eine drehfeste Verbindung, (z.B. eine formschlüssige Mitnahme) an eine Hohlwelle eines Elektromotors gekoppelt. Die Gewindemutter ist an einem linearbeweglichen Auslegerrohr befestigt. In einem (maximal) eingezogenen Zustand des Auslegerrohres ist die Gewindemutter zumindest abschnittsweise, vorzugsweise komplett ins Innere der Hohlwelle eingefahren, an dessen Außenumfang die Wicklungen des Elektromotors sind. Im Betrieb des Linearaktuators rotiert die Gewindespindel und wird nicht linear bewegt. Die Gewindemutter rotiert nicht und wird linear bewegt. Die Gewindemutter schiebt quasi das daran befestigte Auslegerrohr in Richtung zur ausgefahrenen Position bzw. sie zieht das Auslegerrohr zurück in die eingezogene Position. Die Gewindespindel ist durch das Auslegerrohr vor Schmutz und mechanischen Beschädigungen geschützt. Da die Gewindemutter im eingezogenen Zustand von der Hohlwelle und diese wiederum von den Wicklungen des Elektromotors umfasst sind, wird der axiale Bauraum des Elektromotors für den Hub des Linearaktuators genutzt, das Auslegerrohr kann weiter eingefahren werden. Damit ist das Verhältnis der Länge des Linearaktuators bei ausgefahrenem Zustand zur Länge bei eingefahrenem Zustand maximiert.

Der Gewindetrieb kann ein Gewinderollenschraub- oder ein Kugelgewinde- oder ein Planeten(wälz)gewindetrieb sein.

Das Auslegerrohr ist im eingezogenem Zustand zumindest größtenteils, in einem Gehäuse, z.B. in einem ersten Gehäuserohr aufgenommen. Dann ist das Auslegerrohr ist mittels eines Gleitlagers in dem Gehäuse geführt.

Das Gehäuse hat ein erstes Gehäuserohr und ein zweites Gehäuserohr, wobei das erste Gehäuserohr einen gegenüber dem zweiten Gehäuserohr verringerten Durchmesser hat. Der Elektromotor ist dann im zweiten Gehäuserohr angeordnet, und das Gleitlager ist am Innenumfang eines Endabschnitts des ersten Gehäuserohres angeordnet.

Da die Gewindemutter (im Gegensatz zum ersten Ausführungsbeispiel der DE 43 00 512 B4) nicht angetrieben ist, können durch eine Ölschmierung und durch bessere Abdichtmöglichkeiten der Wärmehaushalt und die Lebensdauer verbessert werden. Eine Abdichtung der Gewindemutter ist z.B. durch das erste Gehäuserohr gebildet.

Die drehfeste Verbindung ist an dem vom Auslegerrohr abgewandten Endabschnitt der Hohlwelle und im eingefahren Zustand des Auslegerrohres benachbart zur Gewindemutter angeordnet.

Vorzugsweise ist an einem von der drehfesten Verbindung abgewandten Endabschnitt der Gewindespindel eine Spindelabstützung angeordnet, über die die Gewindespindel in dem Auslegerrohr rotierbar gelagert ist. Das Auslegerrohr ist über die Spindelabstützung auch linear entlang dem Endabschnitt der Gewindespindel geführt. Die Spindelendabstützung kann sich mit dem Endabschnitt der Gewindespindel gegenüber dem Auslegerrohr drehen, oder sie dreht sich nicht.

An der von der Hohlwelle abgewandten Seite der drehfesten Verbindung kann eine Haltebremse angeordnet sein, mit der die Gewindespindel gegenüber dem Gehäuse festlegbar ist.

An der von der Hohlwelle abgewandten Seite der drehfesten Verbindung kann ein Lager, vorzugsweise ein Festlager, vorzugsweise in Form zweier Kegelrollen- oder Pendelrollenlager in O-Anordnung angeordnet sein, mit dem die Gewindespindel im Gehäuse gelagert ist. Wenn die drehfeste Verbindung auch mechanisch fest ist, wenn also die Hohlwelle und die Gewindespindel aneinander befestigt sind, dient dieses Lager vorrichtungstechnisch einfach auch der Lagerung der Hohlwelle.

An der von der Hohlwelle abgewandten Seite der drehfesten Verbindung ist vorzugsweise ein Absolut-Drehgeber an der Gewindespindel angeordnet. Damit ist eine Positionsbestimmung des Auslegerrohres ohne Wegmesssystem möglich.

Vorzugsweise kommt an dieser von der Hohlwelle abgewandten Seite der drehfesten Verbindung benachbart zur drehfesten Verbindung zunächst das Lager, dann die Haltebremse und schließlich der Absolut-Drehgeber.

Am Außenumfang der Hohlwelle an einem von der drehfesten Verbindung abgewandten Endabschnitt der Hohlwelle ist vorzugsweise ein (weiteres) Lager, vorzugsweise Loslager, vorzugsweise ein Kugellager oder Zylinderrollenlager angeordnet, mit dem die Hohlwelle im Gehäuse gelagert ist. Wenn die drehfesten Verbindung auch mechanisch fest ist, wenn also die Hohlwelle und die Gewindespindel aneinander befestigt sind, dient dieses Lager vorrichtungstechnisch einfach auch der Lagerung der Gewindespindel.

Insbesondere der Elektromotor und der Gewindetrieb (Gewindespindel und Gewindemutter) und das Auslegerrohr und die beiden Lager sind vorzugsweise koaxial angeordnet. Damit sind ein seitlich abstehender Elektromotor und daraus resultierende Ungleichgewichte bzw. Drehmomente für die Aufnahmen und Lager vermieden. Weiterhin ist es vorteilhaft wenn auch weitere Bauteile, z.B. die beiden Gehäuserohre und/oder die drehfeste Verbindung und/oder die Spindelabstützung und/oder das zwischen Auslegerrohr und Gehäuserohr angeordnete Gleitlager und/oder die Haltebremse koaxial sind. Damit sind Ungleichgewichte bzw. Drehmomente für die Aufnahmen und Lager vermieden.

Kurzbeschreibung der Figuren
Figur 1 ist eine Ansicht eines Linearaktuators gemäß einem Ausführungsbeispiel der vorliegenden Offenbarung in einem eingezogenen Zustand seines Auslegerrohres;
Figur 2 ist eine geschnittene Darstellung des Ausführungsbeispiels des Linearaktuators aus Figur 1;
Figur 3 ist eine Ausschnittvergrößerung der geschnittenen Darstellung aus Figur 2.

### Beschreibung eines bevorzugten Ausführungsbeispiels

Nachstehend wird ein Ausführungsbeispiel der vorliegenden Offenbarung auf der Basis der Figuren beschrieben.

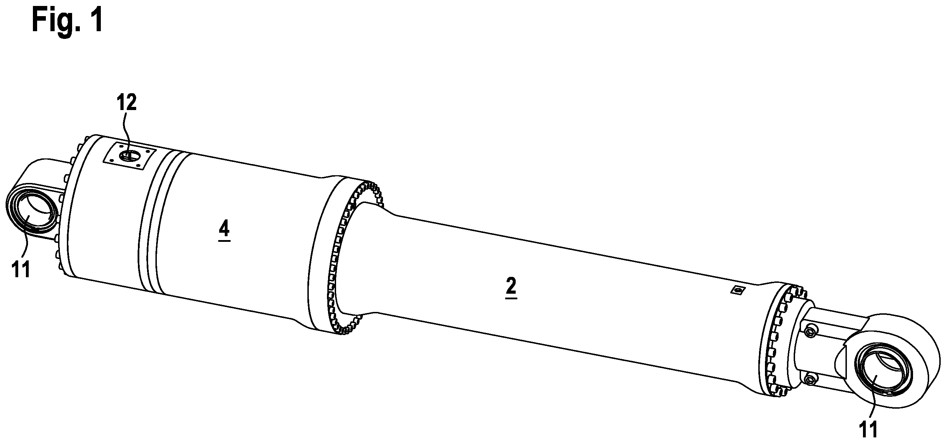

Figur 1 zeigt das Ausführungsbeispiel des elektromechanischen Linearaktuators, der auch als Elektrozylinder bezeichnet werden kann, in einer perspektivischen Ansicht. Bei dem gezeigten eingezogenen Zustand ist ein Abstand zweier Kugelgelenke 11 minimal. Ein mit einem der beiden (in Figur 1 linken) Kugelgelenk 11 fest verbundenes Gehäuse besteht im Wesentlichen aus zwei Gehäuserohren 2, 4 mit unterschiedlichen Durchmessern. Ein weiteres (in Figur 1 rechtes) Kugelgelenk 11 ist gegenüber dem Gehäuse linear bewegbar.

Das erste Gehäuserohr 2 hat gegenüber dem zweiten Gehäuserohr 4 einen verminderten Durchmesser und eine vergrößerte Länge. Am zweiten Gehäuserohr 4 ist ein elektrischer Anschuss 12 gebildet.

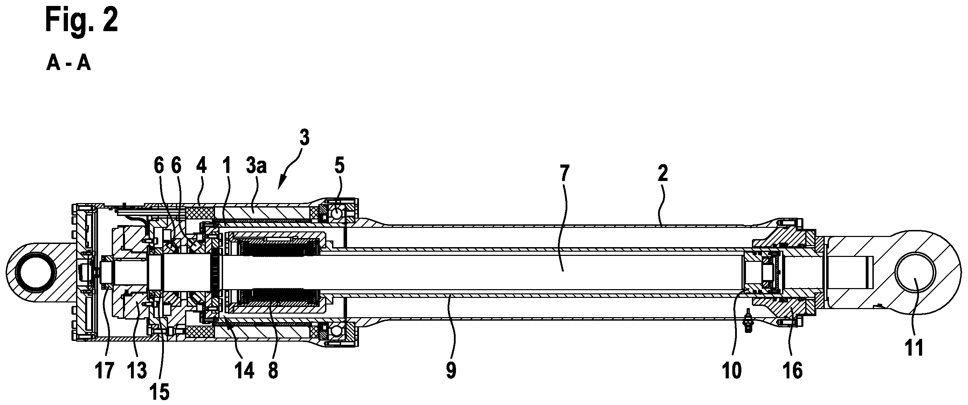

Figur 2 zeigt das Ausführungsbeispiel des Linearaktuators gemäß Figur 1 in einer geschnittenen Darstellung. Im zweiten Gehäuserohr 4 sind zahlreiche und wesentliche Bauteile des Antriebs angeordnet, während im ersten Gehäuserohr 2 im Wesentlichen ein Auslegerrohr 9 und darin eine Gewindespindel 7 angeordnet sind. Das Auslegerrohr 9, dessen Rotation verhindert ist, ist mit einem der beiden Kugelgelenke 11 fest verbunden und kann aus dem ersten Gehäuserohr 2 ausgefahren werden. Die Gewindespindel 7 rotiert dazu und wird linear nicht bewegt. Ein Spindelabstützung 10 hält einen (in Figur 2 rechten) Endabschnitt der Gewindespindel 7 konzentrisch in dem Auslegerrohr 9 und ermöglicht somit einerseits die Rotation der Gewindespindel 7 im Auslegerrohr 9 und andererseits die lineare Bewegung (Arbeitshub) des Auslegerrohrs 9 gegenüber (dem Endabschnitt) der Gewindespindel 7. Damit kann die Spindelabstützung 10 auch als Gleithublager bezeichnet werden.

Weiterhin ist zur Ermöglichung der linearen Bewegung (des Arbeitshubs) des Auslegerrohrs 9 gegenüber dem Endabschnitt des ruhenden ersten Gehäuserohres 2 zwischen diesen Bauteilen ein Gleitlager 16 vorgesehen.

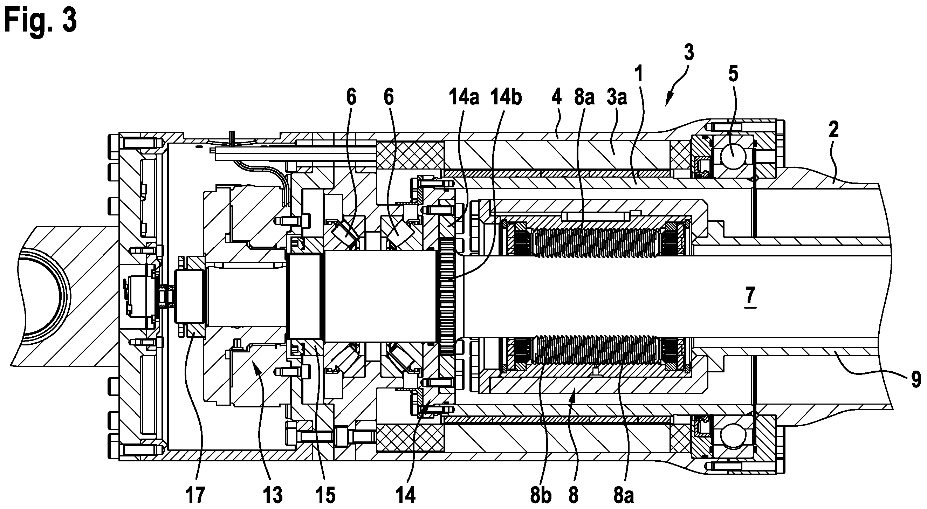

Figur 3 zeigt das Innere des zweiten Gehäuserohres 4 in einer vergrößerten Darstellung. Im zweiten Gehäuserohr 4 sind ein als Hohlwellenmotor ausgebildeter Elektromotor 3 und ein als Planeten(wälz)gewindetrieb ausgebildeter Gewindetrieb angeordnet. Genauer gesagt sind - radial von außen nach innen betrachtet - zunächst Wicklungen 3a des Elektromotors 3, dann eine Hohlwelle 1 des Elektromotors 3, dann ein hülsenartiger Hauptkörper 8b einer Gewindemutter 8, dann rollenförmige Planteten 8a der Gewindemutter 8 und ganz innen die Gewindespindel 7 angeordnet. Zwischen der Hohlwelle 1 und dem Hauptkörper 8b der Gewindemutter 8 ist ein radialer Abstand vorgesehen.

Der Hauptkörper 8b der Gewindemutter 8 ist mit einem Endabschnitt des Auslegerrohres 9 fest verbunden. Die aus der Gewindemutter 8 und dem Auslegerrohr 9 und dem Kugelgelenk 11 bestehende Baugruppe ist lediglich linear beweglich.

Die Hohlwelle 1 ist an ihrem vom ersten Gehäuserohr 2 abgewandten Endabschnitt mittels einer drehfesten Verbindung 14 mit der Gewindespindel 7 verbunden. Ein hohlwellenseitiges Formschlusselement 14a und ein spindelseitiges Formschlusselement 14b der drehfesten Verbindung 14 sind derart ausgebildet und aneinander befestigt, dass die Hohlwelle 1 und die drehfeste Verbindung 14 und die Gewindespindel 7 eine biegesteife rotierbare Baugruppe bilden.

Die Lagerung der rotierenden Baugruppe bestehend aus Gewindespindel 7 und drehfester Verbindung 14 und Hohlwelle 1 kann wegen der biegesteifen Ausführung lediglich mit zwei Lagerstellen im Gehäuse gelagert werden. Dazu sind beim gezeigten Ausführungsbeispiel einerseits ein am Endabschnitt der Hohlwelle 1 angeordnetes Loslager 5 und andererseits ein an der Gewindespindel 7 angeordnetes Festlager vorgesehen. Das Festlager ist aus zwei Kegelrollenlagern 6 in O-Anordnung gebildet, die mittels einer Spannmutter 15 gegen die drehfeste Verbindung 14 gespannt ist.

Benachbart zur Spannmutter 15 ist eine Haltebremse 13 angeordnet, mit der die Gewindespindel 7 und damit der gesamte Antrieb gegenüber dem Gehäuse, genauer gesagt gegenüber dem zweiten Gehäuserohr 4 festgelegt werden kann.

Benachbart zur Haltebremse 13 ist am Wellenende der Gewindespindel 7 ein Absolut-Drehgeber 17 angeordnet. Damit ist eine Positionsbestimmung des Auslegerrohres 7 ohne Wegmesssystem möglich.

Im Betrieb des gezeigten Ausführungsbeispiels wird die Haltebremse 13 gelöst und der Elektromotor 3 aktiviert. Seine Hohlwelle 1 nimmt die Gewindespindel 7 mit. Die Planeten 8a der Gewindemutter 8 wälzen am Außenumfang der Gewindespindel 7 ab und bewegen den rotatorisch festgelegten Hauptkörper 8b und damit das daran befestige Auslegerrohr 9 relativ zum ersten Gehäuserohr 2 und damit relativ zum Gehäuse.

Da die (in den Figuren 2 und 3 gezeigte) eingezogene Position der Gewindemutter 8 im Innern des Elektromotors 3 angeordnet ist, ist der axiale Bauraumbedarf dieser Bauteile minimiert. Damit ist das Verhältnis des Abstandes der beiden Kugelgelenke 11 im ausgefahrenem Zustand zum Abstand der beiden Kugelgelenke 11 im eingefahrenem Zustand (gemäß den Figuren 1 und 2) maximiert.

### Bezugszeichenliste

- 1: Hohlwelle
- 2: erstes Gehäuserohr
- 3: Elektromotor
- 4: zweites Gehäuserohr
- 5: Loslager
- 6: Kegelrollenlager
- 7: Gewindespindel
- 8: Gewindemutter
- 8a: Planet
- 8b: Hauptkörper
- 9: Auslegerrohr
- 10: Spindelabstützung
- 11: Kugelgelenk
- 12: elektrischer Anschluss
- 13: Haltebremse
- 14: drehfeste Verbindung
- 14a: hohlwellenseitiges Formschlusselement
- 14b: spindelseitiges Formschlusselement
- 15: Spannmutter
- 16: Gleitlager
- 17: Absolut-Drehgeber

## Patentansprüche

1. Elektromechanischer Linearaktuator mit einem Gewindetrieb, der eine Gewindespindel (7) und eine Gewindemutter (8) aufweist, wobei die Gewindespindel (7) über eine drehfeste Verbindung (14) an eine Hohlwelle (1) eines Elektromotors (3) gekoppelt ist, und wobei die Gewindemutter (8) an einem linearbeweglichen Auslegerrohr (9) befestigt ist, wobei in einem maximal eingezogenen Zustand des Auslegerrohres (9) die Gewindemutter (8) zumindest abschnittsweise im Innern der Hohlwelle (1) angeordnet ist, wobei das Auslegerrohr (9) in eingezogenem Zustand zumindest größtenteils in einem Gehäuse des Linearaktuators aufgenommen ist, wobei ein von der Gewindemutter (8) abgewandter Endabschnitt des Auslegerrohres (9) mittels eines Gleitlagers (16) in dem Gehäuse geführt ist, **dadurch gekennzeichnet, dass** das Gehäuse ein erstes Gehäuserohr (2) und ein zweites Gehäuserohr (4) aufweist, wobei der Elektromotor (3) im zweiten Gehäuserohr (4) angeordnet ist, und wobei das Gleitlager (16) in oder an dem ersten Gehäuserohr (2) angeordnet ist, und wobei das erste Gehäuserohr (2) einen gegenüber dem zweiten Gehäuserohr (4) verringerten Durchmesser hat.

2. Elektromechanischer Linearaktuator nach Anspruch 1,
wobei die Gewindespindel (8) im Sinne einer fromschlüssigen Mitnahme drehfest an die Hohlwelle (1) gekoppelt ist.

3. Elektromechanischer Linearaktuator nach einem der vorhergehenden Ansprüche, wobei die Gewindemutter (8) eine Ölschmierung hat und gegenüber der Umgebung abgedichtet ist.

4. Elektromechanischer Linearaktuator nach einem der vorhergehenden Ansprüche, wobei die drehfeste Verbindung (14) an einem Endabschnitt der Hohlwelle (1) und im eingefahren Zustand des Auslegerrohres (9) benachbart zur Gewindemutter (8) angeordnet ist.

5. Elektromechanischer Linearaktuator nach einem der vorhergehenden Ansprüche, wobei an einem von der drehfesten Verbindung (14) abgewandten Endabschnitt der Gewindespindel (7) eine Spindelabstützung (10) angeordnet ist, über die die Gewindespindel (7) in dem Auslegerrohr (2) rotierbar gelagert ist, wobei das Auslegerrohr (2) über die Spindelabstützung (10) auch linear entlang dem Endabschnitt der Gewindespindel (7) geführt ist.

6. Elektromechanischer Linearaktuator nach einem der vorhergehenden Ansprüche, wobei auf der von der Hohlwelle (1) abgewandten Seite der drehfesten Verbindung (14) eine Haltebremse (13) angeordnet ist, mit der die Gewindespindel (7) gegenüber dem Gehäuse festlegbar ist.

7. Elektromechanischer Linearaktuator nach einem der vorhergehenden Ansprüche, wobei auf der von der Hohlwelle (1) abgewandten Seite der drehfesten Verbindung (14) ein Lager, vorzugsweise Festlager angeordnet ist, mit dem die Gewindespindel (7) im Gehäuse gelagert ist.

8. Elektromechanischer Linearaktuator nach einem der vorhergehenden Ansprüche, wobei auf der von der Hohlwelle (1) abgewandten Seite der drehfesten Verbindung (14) ein Absolut-Drehgeber (17) an der Gewindespindel (7) angeordnet ist.

9. Elektromechanischer Linearaktuator nach einem der vorhergehenden Ansprüche, wobei am Außenumfang der Hohlwelle (1) an dem von der drehfesten Verbindung (14) abgewandten Endabschnitt der Hohlwelle (1) ein Lager, vorzugsweise Loslager (5) angeordnet ist, mit dem die Hohlwelle (1) im Gehäuse gelagert ist.

## Claims

1. Electromechanical linear actuator having a thread drive, which has a threaded spindle (7) and a threaded nut (8), wherein the threaded spindle (7) is coupled to a hollow shaft (1) of an electric motor (3) via a rotationally conjoint connection (14), and wherein the threaded nut (8) is fastened to a linearly movable extension-arm tube (9), wherein, in a maximally retracted state of the extension-arm tube (9), the threaded nut (8) is arranged at least sectionally in the interior of the hollow shaft (1), wherein, in a retracted state, the extension-arm tube (9) is accommodated at least for the most part in a housing of the linear actuator, wherein an end portion of the extension-arm tube (9) that is remote from the threaded nut (8) is guided in the housing by means of a plain bearing (16), **characterized in that** the housing has a first housing tube (2) and a second housing tube (4), wherein the electric motor (3) is arranged in the second housing tube (4), and wherein the plain bearing (16) is arranged in or on the first housing tube (2), and wherein the first housing tube (2) has a reduced diameter in comparison with the second housing tube (4).

2. Electromechanical linear actuator according to Claim 1,
wherein the threaded spindle (8) is coupled in a rotationally conjoint manner, in the sense of form-fitting driving, to the hollow shaft (1).

3. Electromechanical linear actuator according to one of the preceding claims, wherein the threaded nut (8) is lubricated with oil and is sealed off with respect to the surroundings.

4. Electromechanical linear actuator according to one of the preceding claims, wherein the rotationally conjoint connection (14) is arranged on an end portion of the hollow shaft (1) and, in the retracted state of the extension-arm tube (9), adjacent to the threaded nut (8).

5. Electromechanical linear actuator according to one of the preceding claims, wherein, on an end portion of the threaded spindle (7) that is remote from the rotationally conjoint connection (14), there is arranged a spindle support (10) via which the threaded spindle (7) is mounted rotatably in the extension-arm tube (2), wherein, via the spindle support (10), the extension-arm tube (2) is also guided linearly along the end portion of the threaded spindle (7).

6. Electromechanical linear actuator according to one of the preceding claims, wherein, on that side of the rotationally conjoint connection (14) which faces away from the hollow shaft (1), there is arranged a holding brake (13) by way of which the threaded spindle (7) is fixable with respect to the housing.

7. Electromechanical linear actuator according to one of the preceding claims, wherein, on that side of the rotationally conjoint connection (14) which faces away from the hollow shaft (1), there is arranged a bearing, preferably a fixed bearing, by way of which the threaded spindle (7) is mounted in the housing.

8. Electromechanical linear actuator according to one of the preceding claims, wherein, on that side of the rotationally conjoint connection (14) which faces away from the hollow shaft (1), there is arranged an absolute rotary encoder (17) on the threaded spindle (7).

9. Electromechanical linear actuator according to one of the preceding claims, wherein, on the outer circumference of the hollow shaft (1), there is arranged on that end portion of the hollow shaft (1) which is remote from the rotationally conjoint connection (14) a bearing, preferably a floating bearing (5), by way of which the hollow shaft (1) is mounted in the housing.

## Revendications

1. Actionneur linéaire électromécanique avec un mécanisme fileté, qui présente une broche filetée (7) et un écrou fileté (8), la broche filetée (7) étant couplée à un arbre creux (1) d'un moteur électrique (3) par l'intermédiaire d'une liaison solidaire en rotation (14), et l'écrou fileté (8) étant fixé à un tube en porte-à-faux (9) mobile linéairement, l'écrou fileté (8) étant agencé au moins par sections à l'intérieur de l'arbre creux (1) dans un état rétracté maximal du tube en porte-à-faux (9), le tube en porte-à-faux (9) étant reçu au moins en grande partie dans un boîtier de l'actionneur linéaire dans l'état rétracté, une section d'extrémité du tube en porte-à-faux (9) détournée de l'écrou fileté (8) étant guidée dans le boîtier au moyen d'un palier lisse (16), **caractérisé en ce que** le boîtier présente un premier tube de boîtier (2) et un deuxième tube de boîtier (4), le moteur électrique (3) étant agencé dans le deuxième tube de boîtier (4), et le palier lisse (16) étant agencé dans ou sur le premier tube de boîtier (2), et le premier tube de boîtier (2) ayant un diamètre réduit par rapport au deuxième tube de boîtier (4).

2. Actionneur linéaire électromécanique selon la revendication 1,
la broche filetée (8) étant couplée de manière solidaire en rotation à l'arbre creux (1) dans le sens d'un entraînement par complémentarité de forme.

3. Actionneur linéaire électromécanique selon l'une quelconque des revendications précédentes,
l'écrou fileté (8) ayant une lubrification à l'huile et étant étanchéifié par rapport à l'environnement.

4. Actionneur linéaire électromécanique selon l'une quelconque des revendications précédentes,
la liaison solidaire en rotation (14) étant agencée sur une section d'extrémité de l'arbre creux (1) et, à l'état rétracté du tube en porte-à-faux (9), au voisinage de l'écrou fileté (8).

5. Actionneur linéaire électromécanique selon l'une quelconque des revendications précédentes,
un appui de broche (10) étant agencé sur une section d'extrémité de la broche filetée (7) détournée de la liaison solidaire en rotation (14), par l'intermédiaire duquel la broche filetée (7) est logée de manière rotative dans le tube en porte-à-faux (2), le tube en porte-à-faux (2) étant également guidé de manière linéaire le long de la section d'extrémité de la broche filetée (7) par l'intermédiaire de l'appui de broche (10).

6. Actionneur linéaire électromécanique selon l'une quelconque des revendications précédentes,
un frein de retenue (13) étant agencé sur le côté de la liaison solidaire en rotation (14) détourné de l'arbre creux (1), avec lequel la broche filetée (7) peut être immobilisée par rapport au boîtier.

7. Actionneur linéaire électromécanique selon l'une quelconque des revendications précédentes,
un palier, de préférence un palier fixe, avec lequel la broche filetée (7) est logée dans le boîtier, étant agencé sur le côté de la liaison solidaire en rotation (14) détourné de l'arbre creux (1).

8. Actionneur linéaire électromécanique selon l'une quelconque des revendications précédentes,
un codeur rotatif absolu (17) étant agencé sur la broche filetée (7) sur le côté de la liaison solidaire en rotation (14) détourné de l'arbre creux (1).

9. Actionneur linéaire électromécanique selon l'une quelconque des revendications précédentes,
un palier, de préférence un palier libre (5), avec lequel l'arbre creux (1) est logé dans le boîtier, étant agencé sur la périphérie extérieure de l'arbre creux (1) sur la section d'extrémité de l'arbre creux (1) détourné de la liaison solidaire en rotation (14).
